# EUROPEAN PATENT SPECIFICATION

(11) **EP 0 881 581 B1**
(45) Date of publication and mention of the grant of the patent: **09.03.2005**
(21) Application number: 97830242.0
(22) Date of filing: 26.05.1997
(51) Int. Cl.: G06F 12/10, G06F 12/08

(54) **System for selective and joint invalidation of entries of two, respectively address and data caches, caused by one or more address cache selective invalidations**
System zur selektiven und gemeinsamen Ungültigkeitserklärung von Einträgen eines Adressencachespeichers und eines Datencachespeichers, welche durch ein oder mehrere Adressencacheungültigkeitserklärungen verursacht wird
Système d'invalidation sélective et coordonnée de rubriques de deux antémémoires respectivement d'adresse et de données, causée par une ou plusieurs opérations d'invalidations sélectives d'antémémoire d'adresse

(43) Date of publication of application: 02.12.1998
(73) Proprietor: BULL S.A., 78434 Louveciennes Cedex (FR)
(72) Inventor: Bosisio, Giuseppe, 20099 Sesto San Giovanni, Milano (IT)
(74) Representative: Siniscalco, Fabio

(56) References cited:
- EP-A- 0 438 808
- EP-A- 0 652 520
- KAZUTAKA NOGAMI ET AL: "A 9-NS HIT-DELAY 32-KBYTE CACHE MACRO FOR HIGH-SPEED RISC" IEEE JOURNAL OF SOLID-STATE CIRCUITS, vol. 25, no. 1, 1 February 1990, pages 100-106, XP000101855

## Description

The present invention relates to a jointly operating data and address cache system, which maintains the data consistency relationship in the indirect addressing of a paged memory space.

In modern data processing systems, the memory is not directly visible but is organized into segments, generally but not necessarily with dimensions of 4 Kbytes each, termed pages, and the addressing in effected in indirect mode.

This is essential in order to make the logical location of the information independent, this information being gradually retrieved in the course of processes, from their actual physical location in a memory space.

The manner of addressing commonly used by a processor or an I/O unit (input output) for accessing a memory space, makes provision to employ a logical (or virtual) address in which a field of most significant bits, for example from 12 to 31, logically identifies a page of information, and the least significant bits, from 0 to 11, commonly termed "offsets", identify an item of information, at byte level, within the page.

The logical page address LPA is combined (generally through a sum operation) with a base or TLBP (Translation Logic Block Pointer) pointer stored in a TLBR (Translation Logic Block Register) register.

The shifted address thus obtained is used to point to an RPE (Real Page Entry) location inside an address table, termed TLB (Translation Logic Block) from which the actual page address or RPA (Real Page Address) is extracted, to be used to address the memory location where the information item is to be read or written.

Clearly the real page address RPA, concatenated with the offset, which undergoes no modification, constitutes the real address.

Two conclusions derive immediately from this preamble:
1) Indirect addressing, with one or more indirectnesses, is laborious and involves considerable losses of time.
2) Since the real page addresses are contained in memory tables, which can be modified, the real page addresses have to be regarded as data, to all effects.

To avoid the laborious process of generating real addresses, with arithmetic and memory access operations, whenever it is desired to read or write a data item, use is made, as is known, of address caches, i.e. fast associative memories, in which a plurality of pairs is stored: logical page address and corresponding real page address.

Since these address caches, also termed MMUs (Memory Management Units) have limited capacity, their content has to be renewed according to requirements and substituted with LPA/RPA pairs of actual or envisaged use or else modified if the LPA/RPA relation changes (because the data have been physically transferred into the memory space or because the table TLB has been transferred or modified).

The address caches also have therefore to be subject to a consistency protocol, albeit simplified, and a valid/invalid state indicator has to be associated with the various cache entries, this indicator being set to the invalid state for all the entries of the cache, if the latter is cleared or "flushed" to allow the information content to be replaced by other information, or selectively just for those entries which contain information which is no longer consistent with the table TLB or with the arrangement of the data in the memory space.

Selective invalidation of the cache entries, so as to make way gradually for new information, with "replacement" operations can also be effected on the basis of the well-known LRU criterion for selecting the least recently used entries for replacement thereof, or else with a FIFO (First In First Out) criterion.

The operations for invalidating the entries of an address cache, be they global (flushing) or selective, have weighty implications if, as generally happens, the address cache operates jointly with a data cache since the latter, in order to identify the presence or otherwise of data within it, employs the real addresses, as translated by the address cache, and not the logical addresses.

Evidently if the real addresses are no longer valid, there is no longer a one-to-one correlation between data and real addresses, and the data associated with addresses which are no longer valid have also to be invalidated.

However, precisely because there is no longer a one-to-one correlation between data and real addresses, no logical instrument is now available which makes it possible to identify the data cache entries which have to be selectively invalidated.

To achieve this result it would be necessary to provide complex procedures which preface an operation for invalidating an entry of an address cache with a selective operation for invalidating all the entries of the data cache with which is associated a real page address which will then be invalidated.

These procedures would turn out to be so laborious that in practice selective invalidation is rejected and all the entries of the data cache (or of the data caches if more than one) are invalidated with a "flushing" operation.

As a consequence the data caches are latent until they are loaded with new information, this involving an inevitable slowing down of the processes in progress.

The present invention solves this problem and provides a system of address cache and data cache operating jointly, which makes it possible selectively and jointly to invalidate the entries of the two caches when this is required by the invalidating of one or more entries of the address cache.

The invalidation operation is practically simultaneous, with merely the propagation delays of a simple logic chain and is preferably carried out in two clock signal periods of the system.

These results are achieved by a system as defined in the claims.

A system according to the preamble of Claim 1 is for instance disclosed in document EP-A-0 438 808.

Essentially the system comprises an address cache with several entries, preferably but not necessarily of the full associative type, which, unlike the known address caches, is provided with a first output channel for a state vector whose bits each represent the valid/invalid state of one of the entries, and with a second output channel for an index, indicating the entry selected in rotation.

Associated with the address cache is a data cache in which each entry, as well as the conventional fields for data, for the real address associated with the data and for attributes (defined by a consistency protocol) also comprises an additional field for storing the index which identifies in the address cache the entry which contains the same real page address.

This index, concatenated with the real page address and available with the latter at the output of the address cache, is written to the entry, when the entry is refilled, and correlates the entry of the data cache one-to-one with that of the entry of the address cache which contains the same real page address.

It is therefore possible by means of this index selectively to invalidate the entries of the data cache which are associated one-to-one with an entry of the address cache which is invalidated.

Logic comparison circuits, one for each entry of the data cache, are provided for this purpose, which compare the index, decoded into an index vector if not already stored in this form, with the state vector output by the address cache.

If the index coincides with that of an invalid-state entry of the address cache, the entry of the data cache which contains this index is then also invalidated.

Invalidation can take place asynchronously, simultaneously with the invalidation of the entry in the address cache, with merely the delay due to the propagation times of the logic comparison network or, preferably, synchronously with a delay equal to one period of a clock signal, relative to the invalidation of the entry in the address cache.

The characteristics and advantages of the present invention will become clearer from the description which follows of a preferred embodiment given with reference to the appended drawings in which:
- Fig. 1 is a block diagram of a preferred embodiment of a system of caches, one for addresses, the other for data, operating jointly and consistently in accordance with the present invention;
- Fig. 2 is a construction diagram for comparison logic for the selective invalidation of data cache entries following upon the invalidation of address cache entries in respect of the system of Fig. 1;
- Fig. 3 is a block diagram of a variant embodiment of an address cache for the system of Fig. 1.

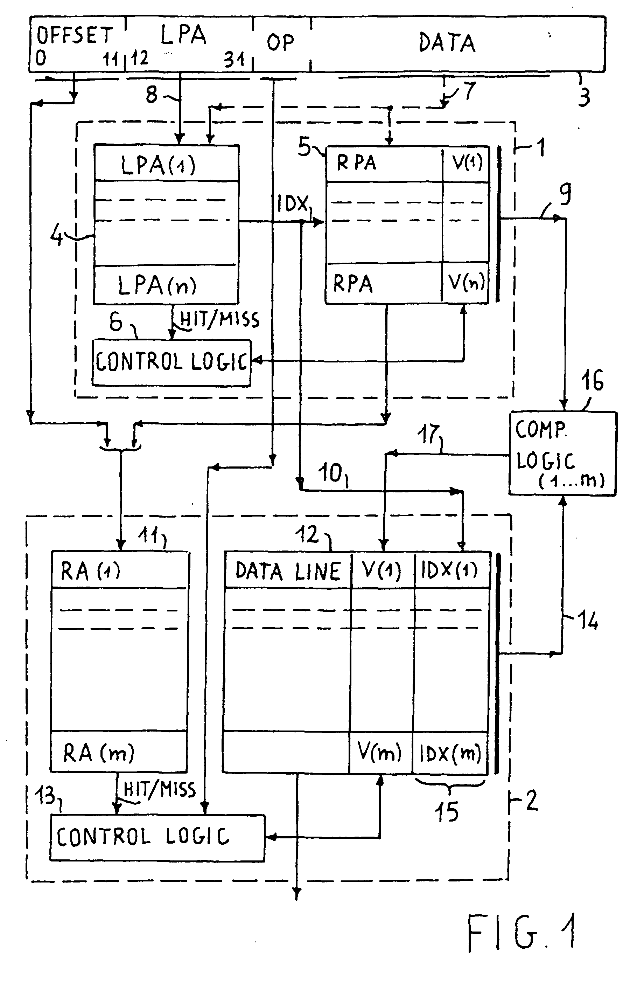

With reference to Figure 1, the system which is the subject of the present invention comprises an address cache 1 cooperating with a data cache 2.

The two caches form part of a processing unit, for example a system processor or an I/O unit which reads or writes data in a generic memory space by means of instructions whose format is represented by the string 3.

The instruction comprises a logical address, for example 32-bit, consisting of an OFFSET (bits 0-11) and of a logical page address LPA (bits 12-31), an operation code OP which defines the operation as a read/write operation or suchlike. In the case of write operations the instruction also comprises the data to be written DATA.

The function of the cache 1 is to convert the logical page address LPA into a real page address, if the latter is present in the cache, in the valid state, and to signal to the processing unit that the read or write operation is to be preceded by the tracing of the real page address in a predetermined table if this address is not present in the cache or is invalid.

In its general aspects the cache 1 is of conventional and well-known type.

It comprises an associative area 4, a random access RAM area 5, addressable with an index IDX and control logic 6.

The two areas comprise a plurality of entries from 1 to n, where for example n = 16.

Stored in the various entries of the associative area are up to n logical page addresses LPA(1...n) and stored in the corresponding entries of the addressable area are the corresponding real page address RPA(1...n) each accompanied by a state bit V(1...n) which indicates, according to its logic level, whether the entry is valid or otherwise, and by other bits indicative of page attributes, which here are of no interest.

It should be observed that the logical and real page addresses do not necessarily have the same number of bits but for example the real addresses can have a greater number thereof so as to address a bigger system physical space than that which is logically addressable.

In the loading phase of the cache 1, the various pairs LPA(1...n) and corresponding RPA(1...n) are presented to the cache via a data channel.

The allocating of the data to the entries and the setting of the corresponding state bit V(1...n) is managed by the control logic 6.

For the conversion of logical addresses into the corresponding physical addresses the logical page address of an instruction is presented via an address channel 8 to the associative area of the cache, and compared with all the addresses LPA(1...n) stored therein.

If one of them coincides with the input address, the associative area 4 posts a signal HIT to the control unit and outputs an index IDX for selecting the corresponding entry of the addressable area 5, which is read and outputs the corresponding address RPA, the associated state bit V and the bits representative of other attributes.

The control logic having verified that the state of the entry is valid, and that the required operation is consistent with the page attributes, enables the outputting by the cache 1 of the address RPA.

Otherwise, if the signal HIT is not posted or if the entry is not valid, a procedure is activated, as already stated, for retrieving and loading the required pair LPA, RPA into an entry of the cache, subject to the invalidation, if necessary, of a cache entry for the replacement thereof.

The address RPA output by the cache 1 and concatenated with the address offset, constitutes a real address, directly useable to access the memory space.

The cache 1 is provided, for the reasons which will be explained later, also with a first output channel 9 for the simultaneous reading in parallel of the state bit V(1...n) of each of the entries.

Together, these bits constitute a state vector which describes the complete state of the cache.

It is also provided with a second output channel 10 for the reading of the selection index IDX and the employing thereof outside the cache.

These two channels are the significant aspects which distinguish the cache 1 from the conventional address caches known in the art.

The data cache 2 also in its architecture can be regarded as of conventional type, except for the aspect specified earlier, and comprises an associative area 11 with m entries (for example m = 8) an area 12 which is addressable with a selection index generated by the associative area, and control logic 13.

Stored in the various entries of the associative area are up to a maximum of m real addresses RA(1...m), excluding the least significant bits depending on the magnitude of the data blocks or lines of the cache.

Stored in the corresponding entries of the addressable area are data lines DATA LINE, in a first field and, in a second field, the state bits which define the state of the data, i.e. of the entry, in conformity with a consistency protocol, for example the protocol known by the acronym MESI standing for Modified, Exclusive, Shared, Invalid.

For simplicity the state bits are represented in Figure 1 as a single bit V(1...m) which, according to its logic level, defines the associated data as valid or invalid.

Since the cache 2 does not differ through these aspects from the data caches known in the art, any detailed description of its structure and mode of operation is superfluous.

The significant aspect which distinguishes the cache 2 from those known in the art is that each cache entry comprises an index field 15 for storing an index IDX(1...m) received from the address cache via the channel 10.

This index is written to the entry concurrently with the writing of the real address RA(1...m).

Another significant aspect is that the cache 2 is provided with an output channel 14 for the simultaneous reading in parallel of the index field 15 of all the entries.

The system is completed by comparison logic 16, consisting of a number m of comparators equal to the number of entries of the data cache, which receives the indices IDX(1...m) from the various entries, compares them with the state vector of the address cache 1, received via the channel 9, and outputs, on a channel 17 with m wires, selective-invalidation signals.

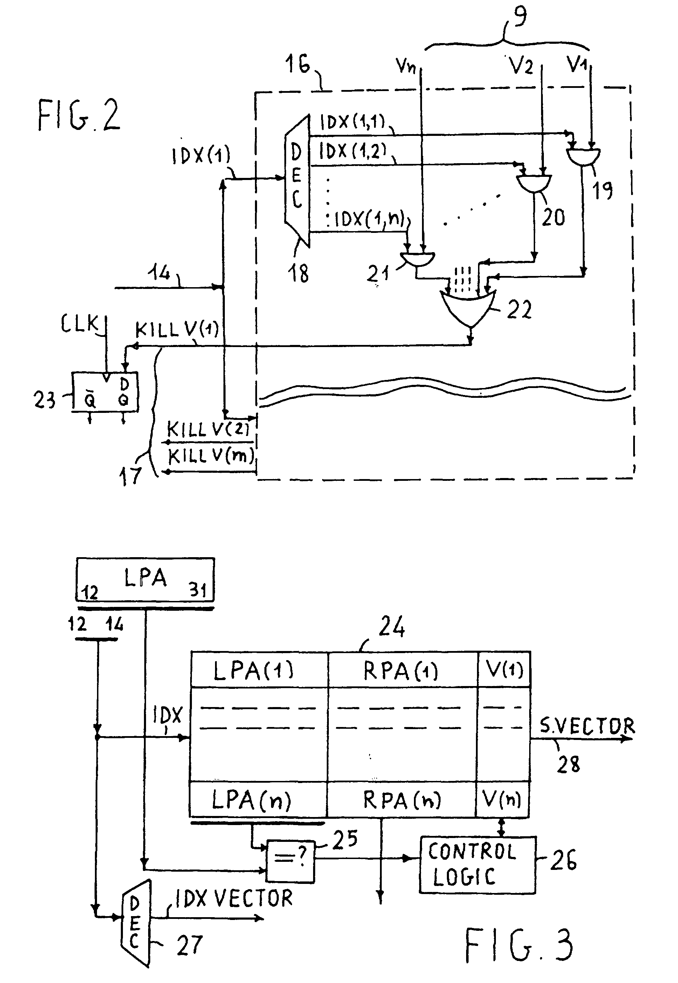

The structure of the comparison logic is very simple and by way of illustration one of the various possible embodiments thereof is given in Figure 2.

It is assumed for example that the invalid state of the entries of the address cache is represented by a bit V(i) at logic level 1.

It is also assumed that the addresses IDX output by the data cache are represented by a binary code IDXi.

In this case the comparison logic, for each code IDXi received, (the code IDX(1) in the specific case represented in Figure 2) consists of a decoder 18 which converts the code into a bit vector IDX(1,1..n) in which just one of the bits is at logic level 1.

With each bit of the vector there corresponds an entry of the address cache and the bit at logic level 1 identifies the entry selected by the code IDX1.

The bits of the vector IDX(1,1..n) are each logic ANDed with the corresponding bits V1,V2,..Vn of the state vector, received via the channel 9, by means of n AND gates 19, 20, 21.

The outputs of the AND gates 19, 20, 21 are logic ORed by the OR gate 22.

It is evident that if the bit at logic level 1 of the vector IDX (1,1...n) is paired with a bit of the state vector at logic level 1, hence indicative of an invalid entry of the address cache, a signal KILL V(1) at logic level 1 is present at the output of the OR gate 22, and makes it possible to invalidate the entry of the data cache associated with the code IDX1.

Wholly identical is the comparison logic for the other codes IDX2,...IDXm which generates the invalidation signals KILL V(2),..KILL V(m).

The signal KILL V(1) can be used as the signal for asynchronous setting of the memory cell 23 which defines the invalid/valid state (depending on whether set or reset) of the first entry of the data cache which contains the code IDX1.

In practice, the cache cells preferably consist of D-type flip-flops, hence the signal KILL V(1) is applied to the D input (logic ORed with other invalidation signals consequent on a consistency protocol) and the cell switched to the set state on command from a periodic clock signal CLK.

It is therefore evident that if an entry of the address cache becomes invalidated, and this occurs synchronously with a first pulse of the periodic clock signal, then all and only the entries of the data cache which are no longer consistent with the content of the address cache become selectively invalidated with the immediately following pulse.

Since the comparison logic 16 is very simple it is possible to operate with a periodic clock signal having high frequency of the order of 100 MHz or more.

It should be noted that the index IDX generated by the address cache can already be in vectorized form or can be converted into vectorized form before being stored in the data cache.

In this case the decoder 18 in the comparison logic is superfluous.

It should also be noted that in the address and data cache system described, the mechanism of selective invalidation of entries of the data cache, as a consequence of invalidations executed in the address cache, which may be dubbed indirect invalidation, is additional to the mechanisms of direct invalidation, which are normally provided, to allow the replacement of data, when necessary, and to ensure their consistency.

The above description relates only to a preferred embodiment and it is clear that many variants may be introduced, both to the comparison logic 16 and to the structure of the cache.

For example, rather than using caches of the "fully associative" type it is also possible to use caches of the so-called "set-associative" type with one or more pathways, for the address or data cache or for both, if the limits which these types of caches put on the replacement operations and on the classes of storable information do not constitute an impediment.

Fig. 3 represents a cache of this type, used as address cache for the system already described.

The cache comprises a random access RAM memory 24 with a number n of entries, comparison logic 25 and control logic 26.

Each entry comprises a field for storing a logical page address LPA(1)...LPA(n), a field for storing the corresponding real page address RPA(1)...RPA(n) and a field for storing a state bit V(1)...V(n).

The memory 24 is addressed with an entry selection index IDX consisting of a certain number of bits (for example bits 12-14) of the logical page address LPA, received from outside.

The outside logical page address is compared with that stored in the entry selected by the index, and if there is coincidence, and the entry is valid, the corresponding real page address read from memory is the translation of the logical input address.

In this case the index code IDX is supplied from outside rather than being generated by the cache.

The same code, in the case when converted into a vector IDX VECTOR by a decoder 27 can be applied as input to a data cache, not illustrated, as in the embodiment of Fig. 1.

In this case also the address cache has to be provided with output channels 28 for the reading in parallel of the state vector S VECTOR.

In the above description the address to be shifted was termed the logical address for simplicity and clarity and so as to distinguish it clearly from the real or shifted physical address.

However, it is evident that in modern data processing systems, in particular in multiprocessor systems, it is possible to have several successive levels of shifting of addresses, so that logical address should be understood to mean any address which is to be shifted, by one or more processing units so as to address the physical memory space.

## Claims

1. System comprising a data cache (2) and an address cache (1), operating jointly, in which said address cache comprises a plurality of entries, selected by an index (IDX), each containing a page address to be translated, a corresponding translated page address, and a bit indicating the valid/invalid state of the respective entry, and said data cache comprises a plurality of entries each containing a data line, a respective address comprising a translated page address, and a respective field of state attributes defined by a consistency protocol, one of said states being an invalid state, **characterized in that**
- said address cache comprises a first output channel (9) for the reading in parallel, as state vector, of said bit indicating the valid/invalid state of each of said address cache entries and a second output channel (10) for said index (IDX),
- said data cache (2) comprises, in each of its entries, an index storage field (15), received from said address cache and associated with said translated page address contained in the same entry, and an output channel (14) for the reading in parallel of said index, stored in each of said data cache entries,
said system furthermore comprising:
logic means of comparison (16), of each of the indices output by said data cache on said output channel (14) with said state vector, received via said first output channel (9) so as to recognize among said indices, invalid-state address cache entry selection indices and so as to output invalidation signals (17, KILL V(1)...V(m)), for the data cache entries containing the indices recognized as invalid-state address cache entry selection indices.

2. System according to Claim 1 in which said index is stored in said data cache (2) in binary vector form.

## Patentansprüche

1. System mit einem Datencachespeicher (2) und einem Adressencachespeicher (1), die zusammenarbeiten, wobei der Adressencachespeicher eine Vielzahl von durch einen Index (IDX) ausgewählten Einträgen umfasst, wobei jeder eine zu übersetzende Seitenadresse, eine entsprechende übersetzte Seitenadresse und ein Bit, welches den gültigen/ungültigen Zustand des jeweiligen Eintrags anzeigt, enthält, und wobei der Datencachespeicher eine Vielzahl von Einträgen umfasst, die jeweils eine Datenzeile, eine entsprechende Adresse mit einer übersetzten Seitenadresse und ein entsprechendes Feld mit Zustandsattributen, definiert von einem Übereinstimmungsprotokoll, enthalten, wobei einer dieser Zustände ein ungültiger Zustand ist, **dadurch gekennzeichnet, dass**
- der Adressencachespeicher einen ersten Ausgangskanal (9) zum parallelen Lesen des Bits, welches den gültigen/ungültigen Zustand jedes Adressencachespeichereintrags anzeigt, als Zustandsvektor, und einen zweiten Ausgangskanal (10) für den Index (IDX) umfasst,
- der Datencachespeicher (2) in jedem seiner Einträge ein Indexspeicherfeld (15), das vom Adressencachespeicher erhalten wird und zu der im gleichen Eintrag enthaltenen übersetzten Seitenadresse gehört, und einen Ausgangskanal (14) zum parallelen Lesen des Index, der in jedem der Datencachespeichereinträge gespeichert ist, umfasst,
wobei das System weiter umfasst:
eine Logikeinrichtung (16) zum Vergleichen jedes der Indizes, der von dem Datencachespeicher auf dem Ausgangskanal (14) ausgegeben wird, mit dem Zustandvektor, der über den ersten Ausgangskanal (9) erhalten wird, um so unter den Indizes die Auswahlindizes für einen Adressencachespeichereintrag mit ungültigem Zustand zu erkennen und um Ungültigkeitssignale (17, KILL V(1) ... V(m)) auszugeben, für die Datencachespeichereinträge mit den Indizes, die als Auswahlindizes für einen Adressencachespeichereintrag mit ungültigem Zustand erkannt wurden.

2. System nach Anspruch 1, in welchem der Index in dem Datencachespeicher (2) in binärer Vektorform gespeichert ist.

## Revendications

1. Système comprenant une mémoire cache de données (2) et une mémoire cache d'adresses (1), agissant conjointement, où ladite mémoire cache d'adresses comprend une pluralité d'entrées, sélectionnées par un indice (IDX), contenant chacune une adresse de page à traduire, une adresse de page traduite correspondante, et un bit indiquant l'état de validité/invalidité de l'entrée respective, et ladite mémoire cache de données comprend une pluralité d'entrées contenant chacune une ligne de données, une adresse respective comprenant une adresse de page traduite, et un champ respectif d'attributs d'état définis par un protocole de compatibilité, l'un desdits états étant un état invalide,
**caractérisé en ce que** :
ladite mémoire cache d'adresses comprend un premier canal de sortie (9) destiné à la lecture en parallèle, comme vecteur d'état, dudit bit indiquant l'état valide/invalide de chacune desdites entrées de la mémoire cache d'adresses, et un deuxième canal de sortie (10) relatif audit indice (IDX),
ladite mémoire cache (2) de données comprend, dans chacune de ses entrées, un champ (15) de stockage d'indice, reçu de la part de ladite mémoire cache d'adresses et associé avec ladite adresse de page traduite contenue dans cette même entrée, et un canal de sortie (14) servant à la lecture en parallèle dudit indice, stocké dans chacune desdites entrées de la mémoire cache de données,
ledit système comprenant en outre :
un moyen logique de comparaison (16), de chacun des indices délivrés par ladite mémoire cache de données sur ledit canal de sortie (14) avec ledit vecteur d'état, reçu via ledit premier canal de sortie (9) de façon à reconnaître, parmi les indices, des indices de sélection d'entrée de mémoire cache d'adresses d'état invalide et de façon à délivrer des signaux d'invalidation (17, KILL V(1)...V(m)), pour les entrées de la mémoire cache de données contenant les indices reconnus comme indices de sélection d'entrée de mémoire cache d'adresses d'état invalide.

2. Système selon la revendication 1, où ledit indice est stocké dans ladite mémoire cache de données (2) sous forme de vecteur binaire.
